# FASCICULE DE BREVET EUROPEEN

(11) **EP 3 266 123 B1**
(45) Date de publication et mention de la délivrance du brevet: **18.09.2019**
(21) Numéro de dépôt: 16707715.5
(22) Date de dépôt: 01.03.2016
(51) Int. Cl.: H04B 7/185, H04W 72/02

(54) **PROCÉDÉ ET SYSTÈME DE TRANSMISSION MULTI-UTILISATEUR 4D-TDMA**
VERFAHREN UND ÜBERTRAGUNGSSYSTEM MULTI -USER 4D - TDMA
METHOD AND SYSTEM FOR 4D-TDMA MULTI-USER TRANSMISSION

(30) Priorité: 02.03.2015 FR 1500397
(43) Date de publication de la demande: 10.01.2018
(73) Titulaire: Thales, 92400 Courbevoie (FR)
(72) Inventeur: PRILLARD, Bertrand, 92622 Gennevilliers Cedex (FR); TOURET, Marc, 92622 Gennevilliers Cedex (FR)
(74) Mandataire: Dudouit, Isabelle
(86) Numéro de dépôt international: PCT/EP2016/054318
(87) Numéro de publication internationale: WO 2016/139202

(56) Documents cités:
- EP-A1- 2 360 855
- US-B1- 7 359 344
- CLARK P ET AL: "QoS-based provisioning of ATM services over DAMA-controlled SATCOM networks", MILCOM 1999. IEEE MILITARY COMMUNICATIONS. CONFERENCE PROCEEDINGS (CAT. NO.99CH36341) IEEE PISCATAWAY, NJ, USA, IEEE, vol. 2, 31 octobre 1999 (1999-10-31), pages 1358-1362, XP010369831, DOI: 10.1109/MILCOM.1999.821425 ISBN: 978-0-7803-5538-5

## Description

L'invention concerne un procédé et un système de transmission multiutilisateur 4D-TDMA. Elle se situe par exemple dans le domaine des transmissions satellitaires. Elle est mise en oeuvre pour offrir notamment des services très bas débit permettant la transmission de messages d'informations périodiques connus sous l'abréviation anglo-saxonne «PIM» (Periodical Information Message).

Avec l'arrivée des satellites de nouvelles générations, les moyens de communications satellites Satcom opérant dans les bandes X/Ka devraient se généraliser aux terminaux miniaturisés. Dans cette perspective, il faut donc être en mesure de fournir des services de type GSM (Global System For Mobile communication) soit, par exemple, les services voix, échanges de messages courts (SMS), transfert de fichiers ou service BFT, à ces stations très légères et mobiles connues sous l'expression anglo-saxonne « Ultra Light On The Move ».

Un réseau Satcom doit servir de nombreux terminaux, généralement au moins une centaine. Ces terminaux peuvent être des terminaux fixes, des stations avec des capacités variables, des terminaux mobiles connus sous l'abréviation anglo-saxonne OTM (« On The Move »), comportant de petites antennes et un besoin minimal de connexité, des terminaux OTP (« On The Pause ») avec un besoin de débit important pour réaliser des opérations de rapatriement de données, par exemple. Un terminal Satcom peut avoir des besoins très variables en débit: pour le transfert de fichiers «BFT» quelques 100 bits/s, pour la voix sur IP ou VoIP quelques kbits/s, pour un noeud de communication quelques kbits/s, pour des données et de la vidéo, quelques 100kbits/s. Ces exigences posent certains problèmes techniques. Dans le cas des larges débits, les porteurs très bas débits ne sont pas compatibles des applications OTM. Lorsqu'il y a un besoin d'émettre des messages courts régulièrement, de type SMS ou BFT, les services requièrent peu de ressources, mais périodiquement. D'autres applications demandent une certaine flexibilité dans l'utilisation des ressources, une adaptation des porteuses (nombres, fréquences, codage, modulation) en fonction du nombre de terminaux et des services requis (BFT/SMS, VoIP, Données/Vidéo). Pour tous les systèmes, il existe aussi un besoin de résister aux interférences surtout lorsqu'il s'agit de petits terminaux.

L'état de l'art décrit différents systèmes. Il est connu de proposer des services de transfert de fichiers BFT et de transmission SMS, mais uniquement en bande L, rien n'existe en bande X/Ku/Ka et le problème de la protection des données n'est pas posée. Cette solution ne convient pas pour un système de communication plus large. Dans les bandes X/Ku/Ka plusieurs solutions existent, mais elles n'offrent ni protection, ni flexibilité dans l'utilisation des ressources spatiales. Les formes d'ondes DVB-RCS (Digital Video Broadcasting - Return Channel System) en mode multifréquence et accès à division temporel multiple connu sous l'abréviation anglo-saxonne «MF-TDMA» (Multi frequency Time Division Multiple Access) et en mode support séparé par canal SCPC (DVB-S2) (Single Channel Per Carrier/ DVB-S2) sont différentes en termes de codage/modulation; leur mise en oeuvre nécessite en général deux modems différents. Dans le cas de mode hybride SCPC/MF-TDMA, la transition d'un mode à l'autre nécessite donc un redémarrage du modem, ce qui engendre une perte de transmission et de service pendant 1 à 2 mns, par exemple.

Les systèmes MF-TDMA classiques nécessitent une planification complexe impliquant un grand nombre de paramètres tels que le nombre de stations, leurs débits, leur disponibilité. Cette planification est en générale sous-optimale et ceci est d'autant plus vrai pour des réseaux dont le nombre de stations et dont les besoins internet IP sont très variables dans le temps. Le nombre de porteuses doit être adapté au nombre de stations en opération. S'il y a un trop grand nombre de porteuses définies, alors elles seront sous-utilisées quand il y a peu de stations, et a contrario, s'il y a peu de porteuses, elles seront sous-optimales vis-à-vis des besoins Internet IP et des conditions de propagation d'un grand nombre de stations. Par ailleurs, ces systèmes n'offrent qu'une protection limitée puisqu'ils n'offrent pas de moyens de sécuriser les communications, par exemple ils n'utilisent pas le mécanisme d'évasion de fréquence.

Les solutions existantes de l'art antérieur et connues du demandeur n'offrent pas de continuité de services moyen débit/haut débit, ne permettent pas la flexibilité dans l'utilisation des ressources, ne couvrent pas les très bas débits et n'offrent pas la possibilité de protéger les données lors des communications.

Le brevet US 7 359 344 décrit une méthode de contrôle pour un réseau de communication dans laquelle on va générer un plan de « burst time » qui alloue un nombre de slots et une localisation de chaque slot dans une période temporelle d'une trame pour chaque utilisateur, puis on va positionner chaque slot dans la période temporelle allouée à un noeud, de manière régulièrement répartie le long d'un axe temporel. Ces répartitions sont statiques.

Les abréviations suivantes seront utilisées dans la suite de la description :
ACM : Adaptive Coding and Modulation, technique qui consiste à adapter dynamiquement le taux de codage et l'ordre de la modulation utilisée en fonction de la qualité du signal reçu,
PIM : message équivalent à un message court SMS (Short Message System),
TDMA: multiplexage temporel ou en anglo-saxon «Time Division Multiple Access »,
SCPC: Connectivité de Bande Passante Dédiée connu sous l'expression anglo-saxonne Single Channel Per Carrier.
Le terme « station » ou « terminal » désigne un même dispositif.

L'un des objectifs de la présente invention est notamment d'offrir un service de type GSM sécurisé Satcom pour des terminaux équipés de moyens de communication par satellite dans les bandes X/Ka, dans un système 4D-TDMA.

L'invention concerne un procédé de transmission multiutilisateur dans un réseau comprenant au moins une station centrale de contrôle NCC et un ou plusieurs terminaux, utilisant une bande de transmission B, P canaux de transmission dans la bande de transmission B, caractérisé en ce qu'il comporte au moins les étapes suivantes :
- déterminer le nombre de porteuses *4D-TDMA* en fonction du nombre et des besoins des terminaux,
- déterminer le type (TDMA ou SCPC) et la bande fréquentielle Bi de chacune des porteuses 4D-TDMA en fonction des terminaux transmettant sur ces porteuses, pour chaque trame, en partageant la bande de transmission B en P_{TDMA} canaux de transmission multi-utilisateur et en P_{SCPC} canaux de transmission mono-utilisateur, chaque canal étant constitué de trames Tₙ ayant chacune une durée de trame Tₜᵣₐₘₑ, indépendante du type de canal et comprenant plusieurs slots, respectivement S_{TDMA} slots, S_{SCPC} slots, chaque trame Tₙ a une durée de trame Tₜᵣₐₘₑ, indépendante du type de canal, l'adaptation du nombre de canaux étant réalisée au rythme trame T_{Trame}, la porteuse et le type de créneaux temporels étant définis en fonction du ou des services demandés par les terminaux, en vérifiant que la somme des bandes fréquentielles ∑Bi utilisées est inférieure à la largeur de bande de transmission B,
- allouer de manière dynamique plusieurs slots d'une porteuse 4D-TDMA en fonction des services requis par chaque terminal,
- configurer le schéma de codage/modulation de chaque slot en tenant compte de la qualité des signaux reçus.

Dans le cas où un terminal a besoin d'un service minimal le procédé peut libérer la bande allouée à son canal et distribuer cette bande aux autres canaux de type mono-utilisateur SCPC et multiplexage temporel TDMA.

Dans le cas de porteuses synchrones, on utilise, par exemple, une loi de saut de fréquence orthogonale, les canaux changeant de façon synchrone la fréquence centrale de leur porteuse.

Pour une application où le temps palier des porteuses TDMA est égal au temps palier des porteuses SCPC, le saut de fréquence est, par exemple, exécuté en un seul temps, en utilisant un seul rythme temporel.

Lorsque le temps palier des porteuses TDMA est différent du temps palier des porteuses SCPC, le saut de fréquence peut être réalisé en deux temps :
- Un premier saut de fréquence des paliers d'un même type de canal au rythme palier,
- Un saut de fréquence des bandes allouées aux canaux SCPC et canaux TDMA au rythme créneau temporel.

Selon une variante de réalisation, la mise en oeuvre du procédé peut comporter plusieurs canaux de service à débit constant CBR voix sur IP VoIP, plusieurs canaux de service à débit variable VBR pour de la transmission de fichiers ou de données, et les slots VoIP non alloués sont taggués « données » pour la durée d'une trame, les slots VoIP non utilisés sont remis dans un ensemble de ressources « meilleur effort », les slots dédiés aux données sont distribués aux terminaux suivant un algorithme de type Round Robin connu de l'homme du métier.

Selon une variante de mise en oeuvre du procédé, la station centrale de contrôle indique à l'ensemble des terminaux:
- Les Canaux TDMA
   ∘ Le Nombre de porteuses
   ∘ Pour chaque porteuse
      ▪ La Bande allouée à la porteuse
      ▪ Pour chaque slot de chaque porteuse
         - Le Type de slot
            ∘ CBR VoIP
            ∘ CBR Visio
            ∘ VBR
            ∘ Silence → ce type de slot est utilisé pour les applications 1/2 duplex par exemple
         - Le Schéma de codage et modulation (ModCod) de chaque slot, autre que le slot de silence
         - Le terminal émetteur du slot
- Les Canaux SCPC
   ∘ Le Nombre de porteuses
   ∘ Pour chaque porteuse
      ▪ La Bande allouée à la porteuse
      ▪ La Station Emettrice de la porteuse
      ▪ Le Schéma de codage et modulation (ModCod) de chaque slot
         - En fonction de la bande et du schéma ModCod on en déduit le débit binaire
   Chaque station indique au NCC
- Les services requis
   ∘ Canal VBR
      ▪ Le Débit à transmettre, débit périodique de type BFT ou débit FTP
   ∘ Canal CBR
      ▪ VoIP
   ∘ Canal CBR
      ▪ Visio
- La qualité de la réception des slots qu'il reçoit (C/No).

L'invention concerne aussi un système de transmission multiutilisateur 4D-TDMA caractérisé en ce qu'il comporte au moins un dispositif contrôleur en liaison avec plusieurs terminaux, ledit contrôleur étant adapté à exécuter les étapes du procédé présentant les caractéristiques de l'invention.

La station NCC et les terminaux utilisateurs peuvent être de type half-duplex ou non.

D'autres caractéristiques et avantages de la présente invention apparaîtront mieux à la lecture de la description qui suit donnée à titre illustratif et nullement limitatif, annexée des figures qui représentent :
- La figure 1, une architecture système permettant la mise en oeuvre du procédé selon l'invention,
- La figure 2, un exemple de structure temps/fréquence de trois canaux,
- La figure 3, un exemple d'adaptation de modulation et codage pour des canaux TDMA et SCPC,
- La figure 4, une illustration du mécanisme de réallocation de la bande allouée à chacun des canaux TDMA ou SCPC,
- La figure 5, une illustration du mécanisme d'adaptation du nombre canaux TDMA ou SCPC,
- La figure 6, une illustration de saut de fréquence orthogonale des canaux SCPC et TDMA,
- La figure 7, une illustration de saut de fréquence orthogonal trois canaux TDMA, un canal SCP,
- La figure 8, un exemple de distribution des slots temporels suivant des services voie ou donnée, et
- La figure 9, une illustration de l'application à un terminal half-duplex.

L'un des objectifs de la présente invention est d'offrir un système 4D-TDMA et un procédé de transmission multiutilisateur offrant notamment les fonctionnalités suivantes: la protection de la transmission des données, l'optimisation de la bande fréquentielle utilisée afin de transmettre le plus de bits par Hz possible pour l'ensemble de la bande de transmission, une flexibilité dans l'allocation des ressources, la possibilité de satisfaire un maximum d'utilisateurs en réduisant les risques de contention tout en garantissant des services définis (VoIP, par exemple).

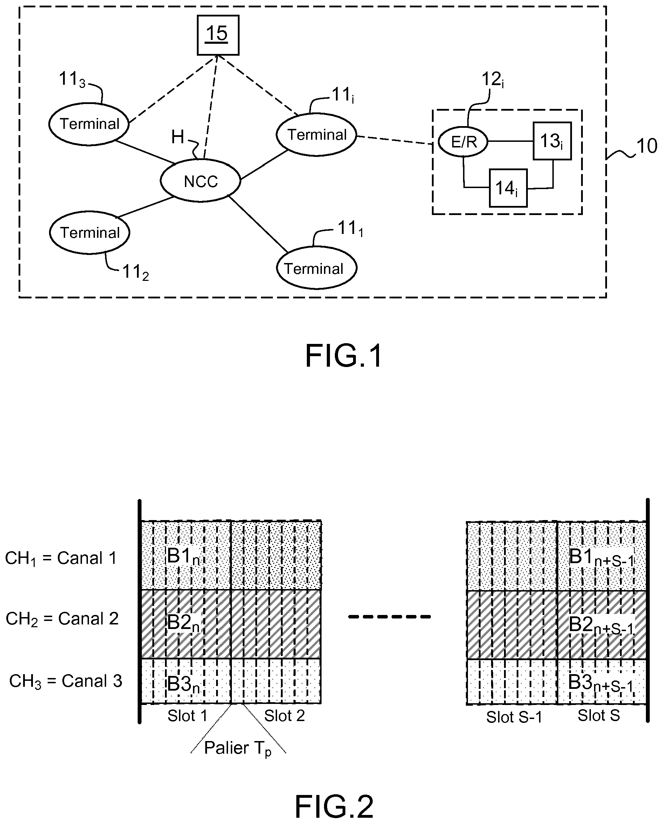

La figure 1 illustre un exemple de réseau de transmission 10 dans lequel peut être mise en oeuvre l'invention. Le réseau est, par exemple, en topologie étoilée avec un dispositif centralisé ou hub H et plusieurs terminaux 11i comprenant des moyens d'émission/réception 12i, des moyens de communication par satellite dans les bandes X/Ka, 14i, par exemple. A un instant t chaque terminal 11i utilise pour satisfaire ses services une portion Bᵢ de la bande passante de transmission B du réseau de transmission pour transmettre un débit Q(Di) de données Dᵢ. Ce débit est associé à une efficacité spectrale ηᵢ avec ηᵢ= Dᵢ/ Bᵢ. L'un des objectifs du procédé selon l'invention est d'optimiser l'utilisation de la bande passante B en maximisant l'efficacité spectrale globale η= (∑Dᵢ/ Bᵢ), de toutes les stations, à chaque instant, et ceci afin de pouvoir maximiser les services alloués à l'ensemble des terminaux. En parallèle de cette optimisation, le procédé permet une protection des données contre des interférences. Le procédé peut aussi s'appliquer à des réseaux maillés en transmission satellitaire.

Le hub H comprend un contrôleur central ou NCC ayant notamment pour fonction de gérer l'allocation des bandes Bᵢ, en fonction notamment des besoins des terminaux qui les expriment sous forme de requêtes transmises vers le hub.

Un terminal 11i comprend, par exemple, un module 13i adapté à mesurer la qualité des signaux reçus afin notamment d'adapter le codage, la modulation.

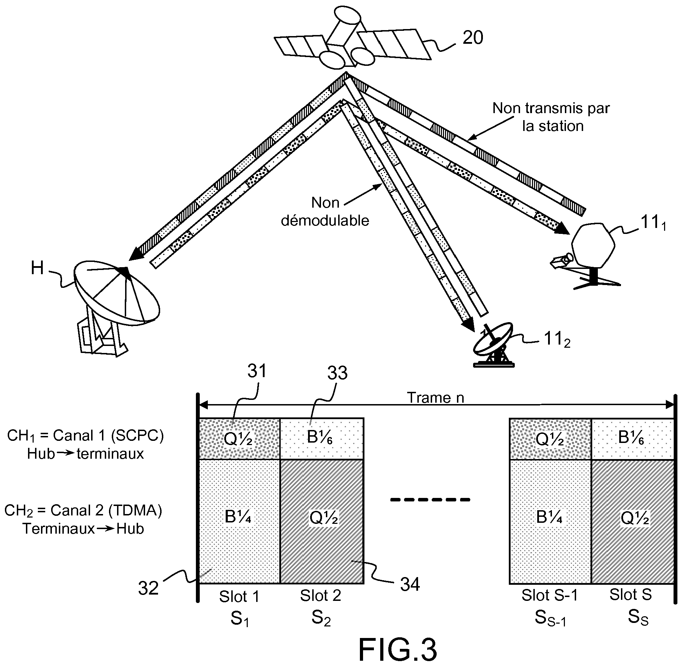

Le réseau de transmission est associé à un système de synchronisation 15 permettant notamment la synchronisation en émission et/ou en réception entre les différents terminaux ou entre un terminal et le contrôleur central NCC. Le réseau utilise les services de communication fournis par un satellite de communication 20 (figure 3).

Le procédé selon l'invention est aussi applicable au domaine des transmissions terrestres les moyens de communication 14i pouvant être un support de transmission satellite ou par liaisons terrestres.

Le procédé selon l'invention met notamment en oeuvre des mécanismes permettant de réaliser de manière dynamique l'adéquation entre les canaux de service et les canaux de transmission de données lorsque le système est en cours de fonctionnement.

Pour les canaux de transmission, le procédé utilise :
- une bande B de transmission de largeur BHz,
- P canaux de transmission dans la bande de transmission B. Le nombre de canaux de transmission est inférieur ou égal au nombre d'émetteurs. P est variable dans le temps en fonction du nombre d'émetteurs présents dans le réseau de transmission.
A un instant t donné, le système comporte :
∘ P_{TMDA} canaux de transmission dits TDMA
   ▪ un canal TDMA est partagé par plusieurs émetteurs,
∘ P_{SCPC} canaux de services dits SCPC
   ▪ un canal SCPC est attribué à un seul émetteur pendant la durée Tₜᵣₐₘₑ d'une trame,
• P_{TDMA} + P_{SCPC} = P
   ∘ à l'instar du nombre de canaux de transmission P, le nombre de canaux P_{TDMA} et le nombre de canaux P_{SCPC} sont variables dans le temps.
Les canaux sont synchrones, c'est-à-dire que les signaux qu'ils transportent arrivent tous au hub ou au satellite dans le cas de transmissions satellitaires au même instant.

Le procédé va exécuter, par exemple les étapes suivantes :
- déterminer le nombre de porteuses *4D-TDMA* en fonction du nombre et des besoins des terminaux,
- déterminer le type de porteuses (TDMA ou SCPC) et la bande fréquentielle Bi de chacune des porteuses 4D-TDMA en fonction des terminaux transmettant sur ces porteuses, pour chaque trame, en partageant la bande de transmission B en P_{TDMA} canaux de transmission multi-utilisateur et en P_{SCPC} canaux de transmission mono-utilisateur, chaque canal étant constitué de trames comprenant plusieurs slots, respectivement S_{TDMA} slots, S_{SCPC} slots, chaque trame Tₙ a une durée de trame Tₜᵣₐₘₑ, indépendante du type de canal, l'adaptation du nombre de canaux étant réalisée au rythme trame T_{Trame},
- allouer de manière dynamique plusieurs slots d'une porteuse 4D-TDMA en fonction des services requis par chaque terminal,
- configurer le schéma de codage/modulation de chaque slot en tenant compte de la qualité des signaux reçus.

En fonction des canaux de services requis par l'utilisateur, l'algorithme mis en oeuvre détermine s'il est plus pertinent de lui allouer un canal de transmission SCPC (non partagé temporellement avec d'autres utilisateurs) ou TDMA (donc partagé entre plusieurs utilisateurs). Ce choix se fait au rythme trame.
Un canal de transmission (TDMA ou SCPC),
- est émis par une porteuse dans une bande fréquentielle B_{i (i=1P)}, avec la somme des bandes Bi utilisées par les P canaux inférieure à la bande de transmission B, ∑Bᵢ ≤ B. L'égalité est préférable en termes d'optimisation, mais ceci dépend de la granularité des porteuses utilisées pour transporter les canaux.
- est constitué de trames de durée Tₜᵣₐₘₑ indépendante du type de canal:
   - une trame TDMA est constituée de S_{TDMA} slots,
   - une trame SCPC est constituée de S_{SCPC} slots.
Le nombre de slots S_{TDMA} d'un canal TDMA peut-être différent du nombre de slots S_{SCPC} d'un canal SCPC. Afin de simplifier l'exposé du procédé selon l'invention, l'hypothèse S_{TDMA}= S_{SCPC} sera retenue dans la suite de la description.
Un slot est constitué de N paliers, intervalles de transmission de durée Tₚ émis à une fréquence Fₚₐₗᵢₑᵣ (N_{TDMA} ou N_{SCPC} paliers suivant le type de canal). La fréquence Fₚₐₗᵢₑᵣ n'est pas constante sur l'ensemble du slot et peut changer à chaque nouveau palier soit toutes les Tₚ secondes.

La figure 3 illustre un exemple de structure temps/fréquence de trois canaux pour une trame sans saut de fréquence, dans le cas d'un système comprenant deux terminaux 11₁, 11₂, le hub H et le satellite de communication 20.

Pendant la durée Tₜᵣₐₘₑ d'une trame, le nombre de canaux de transmission P et les porteuses associées ne changent pas (le type de canal -SCPC ou TDMA- et la bande occupée de chacune des porteuses sont invariants à l'échelle de la trame). L'adaptation du nombre de canaux de transmission, de leur porteuse associée se fait au rythme trame tous les Tₜᵣₐₘₑ secondes. Typiquement le rythme trame est de l'ordre de la seconde.

Sur la figure 2, à un premier canal 1, CH₁, est allouée la bande B1_{n,..,} B1_{n+S-1}; au deuxième canal 2, CH₂, la bande B2_{n,..,} B2_{n+S-1}, au troisième canal 3, CH₃, la bande B3_{n,..,} B3_{n+S-1}, ceci sur les S slots, S₁, ...S_{S-1}, S_{S}, de la trame n.

L'objectif d'un terminal est notamment de pouvoir assurer un certain nombre de services à ses utilisateurs, tels que la visioconférence, la voix sur IP ou VoIP, le transfert de fichiers, etc. Un terminal a donc besoin de canaux de services, les requêtes que les terminaux transmettent vers le hub ou le satellite dans un système satellitaire utilisant la signalisation.

Le système de transmission selon l'invention définit au moins deux types de canaux de services, de service à débit constant CBR pour Constant Bit Rate pour des services de type VoIP, visioconférence, ou des canaux de service à débit variable ou VBR pour Variable Bit Rate pour des transferts de fichiers ou des services « Best Effort ».

Dans l'exemple donné, on suppose que le système définit les trois canaux de services suivants; un premier canal CBR VoIP, un deuxième canal CBR, pour de la visio, un troisième canal VBR pour les données sur IP ou des services « Best Effort ».

Les terminaux du réseau demandent des canaux de services tandis que le contrôleur central NCC alloue des canaux de transmission. Ces demandes et allocation se font à travers le réseau de synchronisation et de signalisation intrinsèquement à la structure des canaux de transmission.

Ce réseau de synchronisation et signalisation est étoilé autour du NCC; il est constitué d'une liaison diffusante point à multipoint du NCC vers l'ensemble des terminaux et d'un ensemble de liaisons point à point terminaux vers NCC.
Le NCC doit pouvoir indiquer à l'ensemble des terminaux:
   - Les Canaux TDMA
      ∘ Le Nombre de porteuses
      ∘ Pour chaque porteuse
         ▪ La Bande allouée à la porteuse
         ▪ Pour chaque slot de chaque porteuse
            - Le Type de slot
               ∘ CBR VoIP
               ∘ CBR Visio
               ∘ VBR
               ∘ Silence → ce type de slot est utilisé pour les applications 1/2 duplex par exemple,
            - Le Schéma de codage et modulation (ModCod) de chaque slot, autre que slot de silence
            - Le terminal émetteur du slot
   - Les Canaux SCPC
      ∘ Le Nombre de porteuses
      ∘ Pour chaque porteuse
         ▪ La Bande allouée à la porteuse
         ▪ La Station Emettrice ou terminal émetteur de la porteuse
         ▪ Le Schéma de codage et modulation (ModCod) de chaque slot
            - En fonction de la bande et du ModCod on en déduit le débit binaire.
Chaque station ou terminal doit pouvoir indiquer au NCC au travers du réseau de synchronisation précité :
   - Les services requis:
      ∘ Canal VBR
         ▪ Le Débit à transmettre, débit périodique de type BFT ou débit FTP
      ∘ Canal CBR
         ▪ VoIP
      ∘ Canal CBR
         ▪ Visio
   - La qualité de la réception des slots qu'il reçoit (C/No)
      ∘ Cette information est utilisée pour l'implémentation de technique de mitigation de la pluie comme l'ACM, et déterminée selon des méthodes connues de l'homme du métier.

Pour réaliser l'adéquation entre les canaux de service et les canaux de transmission, le procédé selon l'invention va exécuter différentes étapes dont quelques exemples de mise en oeuvre sont explicités ci-après.

Les canaux de transmission ne sont pas pré-alloués aux terminaux. L'allocation des canaux de transmission, porteuse et slot, se fait dynamiquement en fonction des services requis pas les terminaux.

Au sein d'une même porteuse SCPC ou TDMA, chaque slot est transmis avec le schéma modulation/codage adapté pour que le terminal récepteur du slot puisse le recevoir sans erreur, selon un principe connu de l'homme du métier. Le NCC va par exemple adapter dynamiquement le taux de codage du code correcteur d'erreur et l'ordre de la modulation utilisée en fonction de la qualité du signal reçu. On peut supposer que le bilan de liaison va permettre de maintenir la synchronisation entre deux terminaux distants ou entre un terminal et le NCC. Le mécanisme de codage/décodage est intrinsèque à la forme d'onde. Le réseau de synchronisation et de gestion étoilée autour du NCC contient la signalisation nécessaire à l'adaptation dynamique des profils de forme d'onde pour chaque terminal. Pour ce qui concerne la liaison diffusante du NCC vers les terminaux, celui-ci doit pouvoir transmettre des données jusqu'au terminal le plus éloigné, le plus défavorisé en ce qui concerne le bilan de liaison. Pour chaque porteuse, de type SCPC ou TDMA, l'adaptation du couple codage/modulation, ModCod, se fait slot par slot indépendamment les uns des autres au rythme slot T_{Slot}. La figure 3 illustre cette étape. Pour le premier slot 1, S₁, de la trame n, le NCC alloue le canal 1, CH₁ SCPC hub vers les terminaux et une modulation Q ½, 31. Pour le même slot S₁, il y a allocation du deuxième canal 2, CH₂ TDMA, pour les échanges de données entre un des terminaux et le hub, avec une modulation B ¼, 32. Au deuxième slot 2 suivant, S₂, le Modcod a changé et devient, 33, B 1/6 pour le premier canal CH₁, et 34 Q ½ pour le deuxième canal 2, CH₂. Aux slots d'ordre impair, on retrouvera par exemple, la modulation choisie pour le premier slot 1, S₁ et pour les slots d'ordre pair, une modulation correspondant à la modulation du deuxième slot 2 S₂.

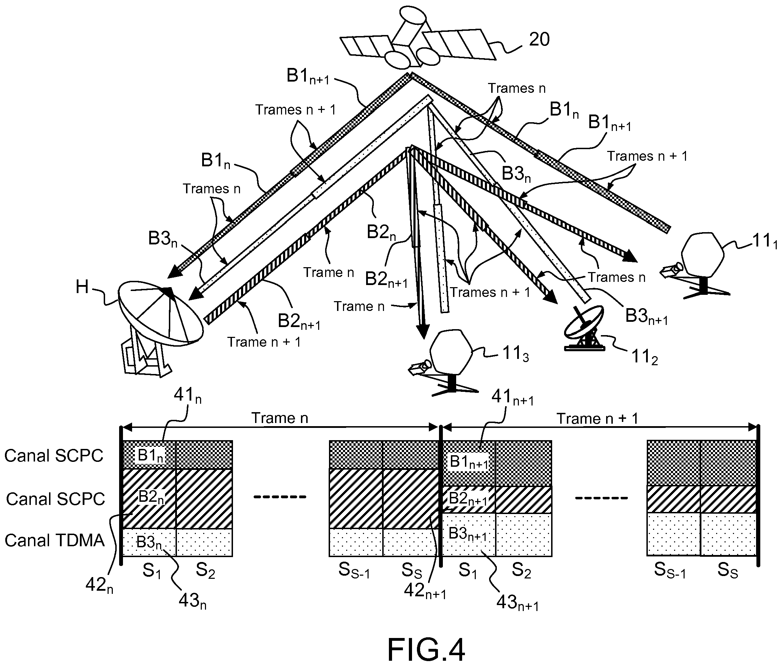

A chaque trame, en fonction des besoins de l'ensemble des terminaux, la bande de transmission B est partagée dynamiquement. Ce partage se fait entre les canaux SCPC et les canaux TDMA. Il n'y a pas de bande propre aux canaux SCPC et propre aux canaux TDMA. L'allocation de la bande allouée pour chaque canal SCPC ou TDMA se fait canal par canal indépendamment les uns des autres, au rythme trame Tₜᵣₐₘₑ, à la condition de ne pas excéder la bande totale B. La figure 4 donne un exemple de cette allocation. Pour la trame Tₙ, pour un premier canal SCPC, le procédé alloue 41ₙ une première sous-bande B1ₙ, pour un deuxième canal SCPC, il alloue 42ₙ une deuxième sous-bande B2ₙ, puis pour le canal TDMA, il alloue 43ₙ une troisième sous-bande B3ₙ. Pour la trame suivante Tₙ₊₁, l'allocation des bandes peut être différente, au premier canal SCPC, 41ₙ₊₁, on a alloué la bande B1ₙ₊₁, pour le deuxième canal SCPC, 42ₙ₊₁, la bande B2ₙ₊₁, pour le canal TDMA, 43ₙ₊₁, la bande B3ₙ₊₁.

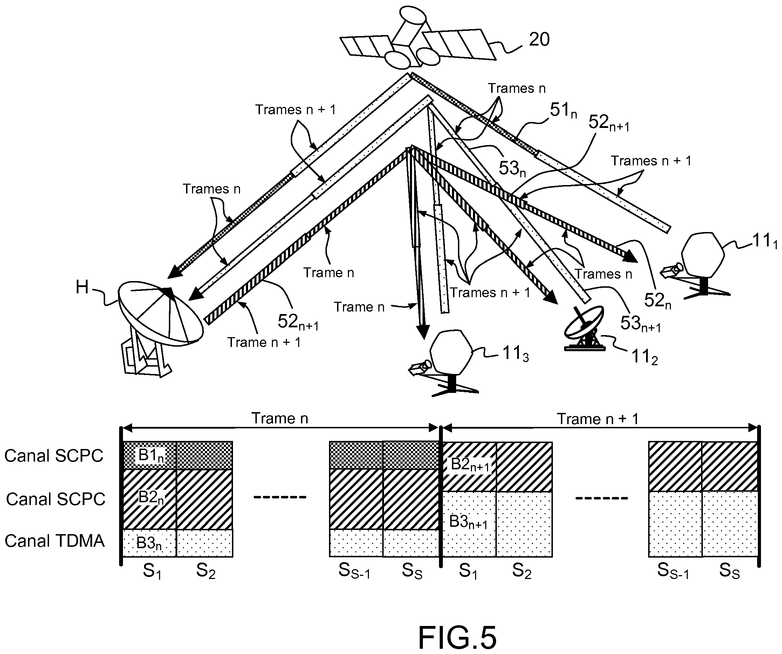

A chaque trame, en fonction des besoins de l'ensemble des terminaux et/ou du nombre de terminaux présents dans le réseau, le nombre de porteuses TDMA, SCPC est recalculé. Dans l'exemple de la figure 5, un terminal 11₁ utilise jusqu'à la trame Tn, un premier canal SCPC, 51 et une bande allouée à ce canal, pour transmettre par exemple un fichier. Une fois la transmission de ce fichier terminé, le terminal n'ayant besoin que d'un service minimal, ou « Best Effort », la bande B1ₙ allouée à ce canal SCPC, 51ₙ, est libérée et redistribuée aux autres canaux SCPC et TDMA, au niveau de la trame n+1, au deuxième canal SCPC on a alloué 52ₙ₊₁ une bande B2ₙ₊₁ et au canal TDMA 53ₙ₊₁ on a alloué une bande B3ₙ₊₁, avec B= B2ₙ₊₁ + B3ₙ₊₁. La station 11₁ utilise alors le canal TDMA, 43, pour transmettre des données si besoin est. Le nombre de porteuses SCPC et TDMA est adapté au rythme trame.

L'ensemble des porteuses SCPC et TDMA sont synchrones. Dans le cas où les porteuses SCPC et TDMA sont constituées de paliers de même durée Tp, le procédé peut implémenter une loi de saut de fréquence orthogonale, i.e., tous les canaux changent de façon synchrone la fréquence centrale Fc de leur porteuse. Le saut de palier est orthogonal car la fréquence centrale de chaque porteuse est calculée de façon à ce que deux porteuses ne se chevauchent pas fréquentiellement. Ceci permet avantageusement d'apporter une protection au niveau des communications.

Par exemple, à chaque palier, on tire aléatoirement l'ordre fréquentiel des canaux :
- C1 (porteuse de largeur B1)
- C2 (porteuse de largeur B2)
- C3 (porteuse de largeur B3)
Pour le palier n : l'ordre est C3, C1 et C2.
Par rapport à la bande de transmission comprise entre Fₘᵢₙ et Fₘₐₓ (B = Fₘₐₓ -Fₘᵢₙ), la fréquence centrale de la porteuse du canal est:
C3 : Fₘᵢₙ + B3/2
C1 : Fₘᵢₙ + B3 + B1/2
C2 : Fₘᵢₙ + B3 + B1 + B2/2
avec B=B1+B2+B3.

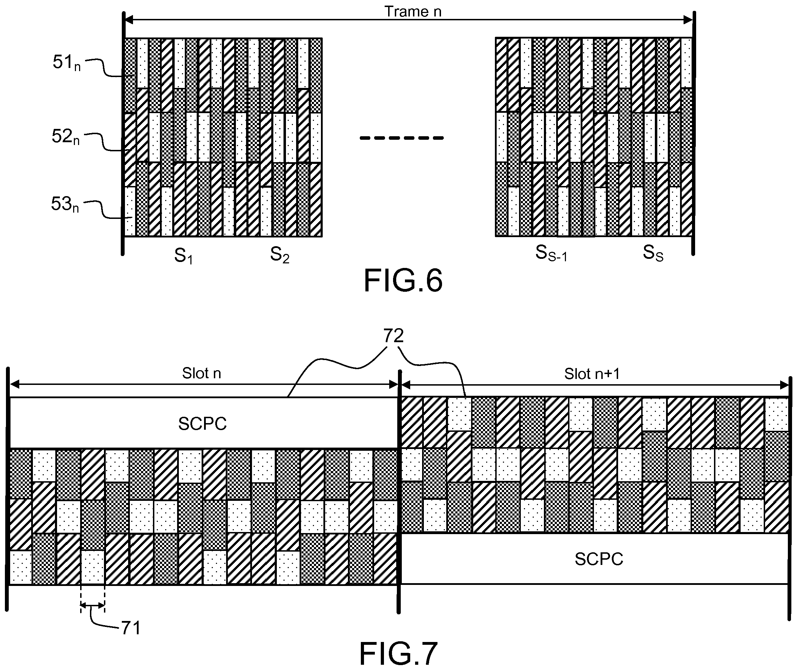

Dans le cas où le temps palier T_{pTDMA} des porteuses TDMA est égal au temps palier T_{pSCPC} des porteuses SCPC, le saut de fréquence orthogonal est exécuté en un seul temps. La figure 6 illustre le saut de fréquence orthogonal des canaux SCPC et TDMA au rythme palier, pour les canaux représentés à la figure 4, par exemple.

La figure 7 illustre un autre exemple pour le cas où le temps palier T_{pTDMA} des porteuses TDMA est différent du temps palier T_{pSCPC} des porteuses SCPC, le saut de fréquence se faisant alors en deux temps:
- un saut de fréquence des paliers d'un même type de canal au rythme palier, 71,
- un saut de fréquence des bandes allouées aux canaux SCPC et canaux TDMA au rythme slot, 72.

Selon une variante de réalisation, le procédé peut préplanifier des porteuses au niveau du NCC afin de faciliter l'adéquation entre les demandes de canaux de services par les terminaux et par les canaux de transmission.

L'exemple qui suit est donné dans le cadre d'une application du procédé et illustre notamment sa mise en oeuvre dans un système comprenant plusieurs utilisateurs appartenant à un groupe de communications (les amis) et un dispositif central. Un dispositif BFT (Blue Force Tracking) permet de connaître l'emplacement des différents acteurs du groupe de communication dans une zone géographique donnée. Ce dispositif affiche l'emplacement des acteurs du groupe sur un fond cartographique ou satellite offrant une excellente vision d'une zone donnée aux différents utilisateurs du système. De la même façon, le suivi d'autres acteurs qui ne font pas partie du même groupe de communication est dénoté, par exemple, RFT (Red Force Tracking).

Dans l'exemple donné, on a :
- un réseau de plusieurs dizaines d'utilisateurs
- quatre Canaux VoIP max, par exemple,
- Canaux VBR (Best Effort) pour du BFT ou de la donnée.

Pour le dispositif BFT, le but est de proposer un service de type SMS (une centaine de caractères envoyé pendant un seul slot). La périodicité des messages BFT par utilisateur est de plusieurs secondes. Les canaux de service VoIP sont alloués à la demande (environ 8kbps par canal)

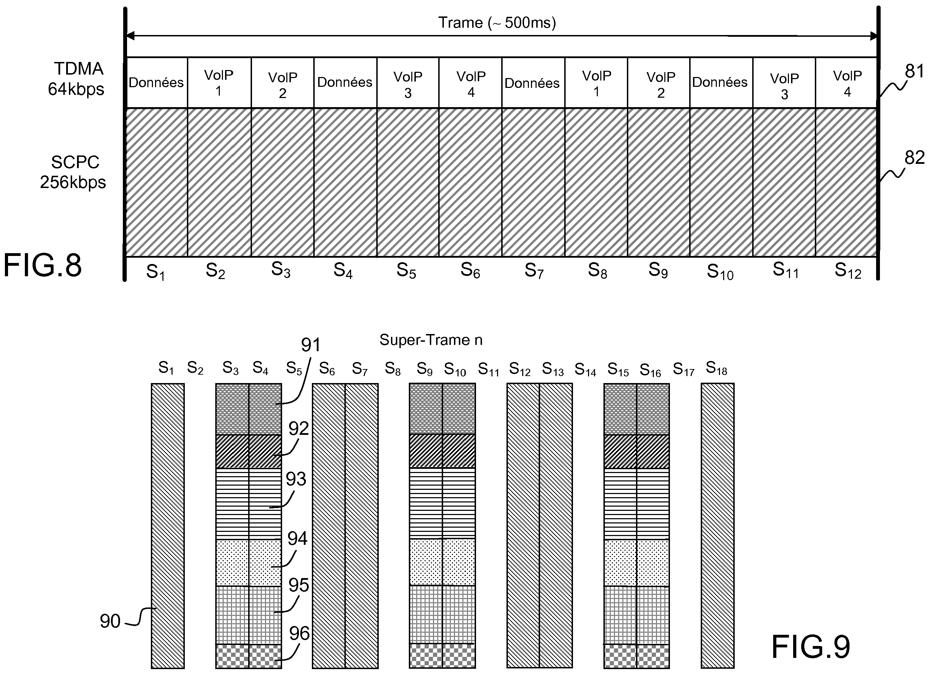

Cette mise en oeuvre est illustrée par la figure 8. Le Hub transmet sur un canal de transmission SCPC, 82. Les slots SCPC ne sont pas taggués car cela permet au terminal seul émetteur de gérer localement sa propre QoS.

Les terminaux utilisateurs, figure 8, transmettent sur le canal de transmission TDMA, 81. Les slots CBR (VoIP) non alloués sont réservés pour la transmission de données pour la durée de la trame (slots VBR). Ces slots « VBR » sont distribués aux terminaux suivant un algorithme de type Round Robin, par exemple.

Le système et le procédé décrits précédemment s'appliquent sans sortir du cadre de l'invention pour des systèmes de transmission terrestre travaillant en half-duplex.

Ceci est illustré par la figure 9 dans le cas où l'agilité du terminal half-duplex ne permet pas d'effectuer un alternat réception vers émission immédiat ; la structure temps-fréquence représentée correspond à un réseau comprenant un NCC et 6 stations ou terminaux. La mise en oeuvre s'appuie sur l'utilisation de 7 canaux TDMA avec une gestion du caractère half-duplex des terminaux par l'insertion de slots de silence permettant l'alternat émission Hub/émission terminaux. Ainsi, le premier slot S₁ est réservé au NCC avec une porteuse 90, le deuxième slot S₂ est un slot de silence, les slots S₃ et S₄ sont réservés aux six stations avec six porteuses, 91, 92, 93, 94, 95, 96.

Selon ce mode de réalisation, la bande de transmission B est totalement utilisé par le hub sur ses slots d'émission et elle est partagée entre les différents terminaux utilisateurs comme décrit précédemment sur les slots d'émission de ces terminaux.

Selon un autre mode de réalisation, le procédé selon l'invention peut être mis en oeuvre au sein d'une application STANAG 4606, connu du domaine technique, par exemple pour des services PIM/Phonie.

## Revendications

1. Procédé de transmission multiutilisateur dans un réseau comprenant au moins une station centrale de contrôle NCC et un ou plusieurs terminaux (11i), utilisant une bande de transmission B, P canaux de transmission dans la bande de transmission B, **caractérisé en ce qu'**il comporte au moins les étapes suivantes :
• déterminer le nombre de porteuses 4D-TDMA en fonction du nombre et des besoins des terminaux (11i),
• déterminer le type de porteuses TDMA ou SCPC et la bande fréquentielle Bi de chacune des porteuses 4D-TDMA en fonction des terminaux transmettant sur ces porteuses, pour chaque trame, en partageant la bande B en P_{TDMA} canaux de transmission multiutilisateur et en P_{SCPC} canaux de transmission mono-utilisateur, chaque canal étant constitué de trames Tₙ ayant chacune une durée de trame Tₜᵣₐₘₑ, indépendante du type de canal, comprenant plusieurs slots, S_{TDMA} slots, S_{SCPC} slots, chaque trame Tₙ a une durée de trame Tₜᵣₐₘₑ, indépendante du type de canal, l'adaptation du nombre de canaux étant réalisée au rythme trame T_{Trame}, la porteuse et le type de créneaux temporels étant définis en fonction du ou des services demandés par les terminaux, en vérifiant que la somme des bandes fréquentielles ∑Bi utilisées est inférieure à la largeur de bande de transmission B,
• allouer de manière dynamique plusieurs slots d'une porteuse 4D-TDMA en fonction des services requis par chaque terminal,
• configurer le schéma de codage/modulation de chaque slot en tenant compte de la qualité des signaux reçus.

2. Procédé selon la revendication 1 **caractérisé en ce que** dans le cas où un terminal a besoin d'un service minimal on libère la bande allouée à son canal et on distribue cette bande aux autres canaux de transmission SCPC et TDMA.

3. Procédé selon l'une des revendications 1 ou 2 **caractérisé en ce que** dans le cas de porteuses synchrones, on utilise un saut de fréquence orthogonale, les canaux changeant de façon synchrone la fréquence centrale Fc de leur porteuse.

4. Procédé selon la revendication 3 **caractérisé en ce que** lorsque le temps palier T_{pTDMA} des porteuses TDMA est égal au temps palier T_{pSCPC} des porteuses SCPC, le saut de fréquence est exécuté en utilisant un seul rythme temporel.

5. Procédé selon la revendication 3 **caractérisé en ce que** lorsque le temps palier T_{pTDMA} des porteuses TDMA est différent du temps palier T_{pSCPC} des porteuses SCPC, le saut de fréquence est réalisé en deux temps :
• Un premier saut de fréquence des paliers d'un même type de canal au rythme palier,
• Un saut de fréquence des bandes allouées aux canaux SCPC et canaux TDMA au rythme créneau temporel.

6. Procédé selon l'une des revendications précédentes **caractérisé en ce qu'**il comporte plusieurs canaux de service à débit constant CBR voix sur IP VoIP, plusieurs canaux de service à débit variable VBR pour de la transmission de fichiers ou de données, et **en ce que** les slots voix sur IP VoIP non alloués sont taggués données pour la durée d'une trame, les slots VoIP non utilisés sont remis dans un ensemble de ressources « meilleur effort », les slots dédiés aux données sont distribués aux terminaux suivant un algorithme de type Round Robin.

7. Procédé selon l'une des revendications précédentes **caractérisé en ce que** :
La station centrale de contrôle indique à l'ensemble des terminaux:
- les Canaux TDMA
∘ le Nombre de porteuses
∘ Pour chaque porteuse
▪ La Bande allouée à la porteuse
▪ Pour chaque slot de chaque porteuse
• Le Type de slot
∘ CBR VoIP
∘ CBR Visio
∘ VBR
∘ Silence → ce type de slot est utilisé pour les applications 1/2 duplex par exemple ;
• Le Schéma de codage et modulation (ModCod) de chaque slot, autre que slot de silence
• Le terminal émetteur du slot
- Les Canaux SCPC
∘ Le Nombre de porteuses
∘ Pour chaque porteuse
▪ La Bande allouée à la porteuse
▪ La Station Emettrice de la porteuse
▪ Le Schéma de codage et modulation (ModCod) de chaque slot
• En fonction de la bande et ModCod on en déduit le débit binaire
Chaque station indique au NCC
- Les services requis
∘ Canal VBR
▪ Le Débit à transmettre, débit périodique de type BFT ou débit FTP
∘ Canal CBR
▪ VoIP
∘ Canal CBR
▪ Visio
- La qualité C/No de la réception des slots qu'il reçoit.

8. Système de transmission multiutilisateur 4D-TDMA (10) **caractérisé en ce qu'**il comporte au moins un dispositif contrôleur NCC en liaison avec plusieurs terminaux (11i), ledit contrôleur étant adapté à exécuter les étapes du procédé selon l'une des revendications 1 à 7.

9. Système de transmission multiutilisateur selon la revendication 8 **caractérisé en ce que** le dispositif NCC et les terminaux utilisateurs opèrent en half-duplex.

## Patentansprüche

1. Multi-User-Übertragungsverfahren in einem Netzwerk, welches mindestens eine zentrale NCC-Kontrollstation und ein oder mehrere Endgeräte (11i) beinhaltet, welche ein Übertragungsband B, P Übertragungskanäle im Übertragungsband B verwendet, **dadurch gekennzeichnet, dass** es mindestens folgende Schritte beinhaltet:
• Bestimmen der Anzahl von 4D-TDMA-Trägersignalen je nach Anzahl und Bedarf der Endgeräte (11i),
• Bestimmen der Art der TDMA- oder SCPC-Trägersignale und des Frequenzbandes Bi eines jeden der 4D-TDMA-Trägersignale je nach den auf diesen Trägersignalen übertragenden Endgeräten, für jeden Rahmen, durch Teilen des Bandes B in P_{TDMA} Multi-User-Übertragungskanäle und in P_{SCPC} Mono-User-Übertragungskanäle, wobei jeder Kanal aus Rahmen Tₙ besteht, welche jeweils eine von der Art des Kanals unabhängige Rahmendauer Tₜᵣₐₘₑ besitzen, welche mehrere Slots, S_{TDMA}-Slots, S_{SCPC}-Slots beinhalten, wobei jeder Rahmen Tₙ eine von der Art des Kanals unabhängige Rahmendauer Tₜᵣₐₘₑ besitzt, wobei die Anpassung der Anzahl der Kanäle im Rahmenrhythmus Tₜᵣₐₘₑ erfolgt, wobei das Trägersignal und die Art der Zeitabschnitte je nach dem oder den von den Endgeräten angeforderten Diensten definiert werden, indem sichergestellt wird, dass die Summe der verwendeten Frequenzbänder ∑Bi kleiner als die Übertragungsbandbreite B ist,
• dynamisches Zuordnen mehrerer Slots eines 4D-TDMA-Trägersignals je nach den von jedem Endgerät angeforderten Diensten,
• Konfigurieren des Codierungs-/Modulationsschemas eines jeden Slots unter Berücksichtigung der Qualität der empfangenen Signale.

2. Verfahren nach Anspruch 1, **dadurch gekennzeichnet, dass**, falls ein Endgerät einen Minimaldienst benötigt, man das seinem Kanal zugeordnete Band freigibt, und man dieses Band an die anderen SCPC- und TDMA-Übertragungskanäle verteilt.

3. Verfahren nach einem der Ansprüche 1 oder 2, **dadurch gekennzeichnet, dass** man im Fall von synchronen Trägersignalen einen orthogonalen Frequenzsprung verwendet, wobei die Kanäle synchron die Mittelfrequenz Fc ihres Trägersignals ändern.

4. Verfahren nach Anspruch 3, **dadurch gekennzeichnet, dass**, wenn die Verweilzeit T_{pTDMA} der TDMA-Trägersignale gleich der Verweilzeit T_{pSCPC} der SCPC-Trägersignale ist, der Frequenzsprung unter Verwendung eines einzigen Zeitrhythmus ausgeführt wird.

5. Verfahren nach Anspruch 3, **dadurch gekennzeichnet, dass**, wenn sich die Verweilzeit T_{pTDMA} der TDMA-Trägersignale von der Verweilzeit T_{pSCPC} der SCPC-Trägersignale unterscheidet, der Frequenzsprung in 2 Schritten ausgeführt wird:
• einem ersten Frequenzsprung der Verweilschritte einer gleichen Kanalart im Verweilschritt-Rhythmus,
• einem Frequenzsprung der den SCPC- und den TDMA-Kanälen zugeordneten Bänder im Zeitabschnitt-Rhythmus.

6. Verfahren nach einem der vorhergehenden Ansprüche, **dadurch gekennzeichnet, dass** es mehrere Dienstkanäle mit konstanter Bitrate, CBR, Voice over IP, VoIP, und mehrere Dienstkanäle mit variabler Bitrate, VBR, für die Übertragung von Dateien oder Daten beinhaltet, und dadurch, dass die nicht zugeordneten voice over IP-Slots VoIP für die Dauer eines Rahmens als Daten getaggt werden, wobei die nicht verwendeten VoIP-Slots an einen "best effort" genannten Ressourcen-Pool zurückgegeben werden, wobei die Daten gewidmeten Slots an die Endgeräte einem Algorithmus vom Typ Round Robin gemäß verteilt werden.

7. Verfahren nach einem der vorhergehenden Ansprüche, **dadurch gekennzeichnet, dass**:
die zentrale Kontrollstation sämtlichen Endgeräten folgende Angaben liefert:
- die TDMA-Kanäle
∘ die Anzahl von Trägersignalen
∘ für jedes Trägersignal
▪ das dem Trägersignal zugeordnete Band
▪ für jeden Slot eines jeden Trägersignals
• die Art der Slots
∘ CBR VoIP
∘ CBR Visio
∘ VBR
∘ Ruhe → diese Art von Slots wird beispielsweise für Halbduplexanwendungen verwendet;
• das Kodierungs- und Modulationsschema (ModCod) eines jeden Slots mit Ausnahme des Ruhe-Slots
• das Sende-Endgerät des Slots
- die SCPC-Kanäle
∘ die Anzahl von Trägersignalen
∘ für jedes Trägersignal
▪ das dem Trägersignal zugeordnete Band
▪ die Sendestation des Trägersignals
▪ das Kodierungs- und Modulationsschema (ModCod) eines jeden Slots
• je nach Band und ModCod wird hieraus die binäre Rate geschlossen Jede Station liefert der NCC folgende Angaben
- die angeforderten Dienste,
∘ VBR-Kanal
▪ zu übertragende Rate, periodische Rate vom Typ BFT oder FTP-Rate
∘ CBR-Kanal
▪ VoIP
∘ CBR-Kanal
▪ Visio
- die C/No-Qualität das Empfangs der empfangenen Slots.

8. 4D-TDMA-Multi-User-Übertragungssystem (10), **dadurch gekennzeichnet, dass** es mindestens eine NCC-Controllervorrichtung in Verbindung mit mehreren Endgeräten (11i) beinhaltet, wobei der Controller geeignet ist, die Schritte des Verfahrens nach einem der Ansprüche 1 bis 7 auszuführen.

9. Multi-User-Übertragungssystem nach Anspruch 8, **dadurch gekennzeichnet, dass** die NCC-Vorrichtung und die User-Endgeräte im Halbduplexmodus arbeiten.

## Claims

1. Method of multiuser transmission in a network comprising at least one central control station NCC and one or more terminals (11i), using a transmission band B, P transmission channels in the transmission band B, **characterized in that** it comprises at least the following steps:
• determining the number of 4D-TDMA carriers depending on the number and the needs of the terminals (11i),
• determining the type of TDMA or SCPC carriers and the frequency band Bi of each of the 4D-TDMA carriers depending on the terminals transmitting on these carriers, for each frame, by splitting the band B into P_{TDMA} multiuser transmission channels and P_{SCPC} single-user transmission channels, each channel consisting of frames Tₙ having each a frame duration T_{frame}, which is independent of the channel type, comprising several slots, S_{TDMA} slots, S_{SCPC} slots, each frame Tₙ having a frame duration T_{frame}, which is independent of the channel type, the adaptation of the number of channels being carried out at the frame rate T_{frame}, the carrier and the type of time slices being defined depending on the service or services requested by the terminals, while verifying that the sum of the frequency bands ∑Bi used is less than the transmission bandwidth B,
• allocating in a dynamic manner several slots of a 4D-TDMA carrier depending on the services requested by each terminal,
• configuring the coding/modulation scheme for each slot while taking into account the quality of the signals received.

2. Method according to claim 1, **characterized in that** in the case where a terminal needs a minimum service, the band allocated to its channel is released and this band is distributed to the other SCPC and TDMA transmission channels.

3. Method according to one of claims 1 or 2, **characterized in that** in the case of synchronous carriers, an orthogonal frequency hop is used, the channels changing in a manner synchronously the central frequency Fc of their carrier.

4. Method according to claim 3, **characterized in that** when the period time T_{pTDMA} of the TDMA carriers is equal to the period time T_{pSCPC} of the SCPC carriers, the frequency hop is executed while using a single timing rate.

5. Method according to claim 3, **characterized in that** when the period time T_{pTDMA} of the TDMA carriers is different from the period time T_{pSCPC} of the SCPC carriers, the frequency hop is carried out in two stages:
• a first frequency hop of the periods of the same channel type at the period rate,
• a frequency hop of the bands allocated to the SCPC channels and TDMA channels at the time slice rate.

6. Method according to one of the preceding claims, **characterized in that** it comprises several Voice over IP VoIP constant bitrate CBR service channels, several service variable bitrate VBR channels for transmission of files or data, and **in that** the unallocated Voice over IP VoIP slots are tagged as data for the duration of a frame, the unused VoIP slots are put back into a set of "best effort" resources, the slots dedicated to the data are distributed to the terminals according to an algorithm of Round Robin type.

7. Method according to one of the preceding claims, **characterized in that**:
the central control station indicates to the set of terminals:
- the TDMA Channels
∘ the Number of carriers
∘ For each carrier
▪ The Band allocated to the carrier
▪ For each slot of each carrier
• The slot type
∘ CBR VoIP
∘ CBR Visio
∘ VBR
∘ Silence → this type of slot is used for 1/2 duplex applications for example;
• The coding and modulation Scheme (ModCod) for each slot, other than silence slot
• The sender terminal for the slot
- The SCPC Channels
∘ The Number of carriers
∘ For each carrier
▪ The Band allocated to the carrier
▪ The Sender Station for the carrier
▪ The coding and modulation Scheme (ModCod) for each slot
• Depending on the band and ModCod, the binary bitrate is deduced therefrom
Each station indicates to the NCC
- The services requested
∘ VBR Channel
▪ The Bitrate to be transmitted, periodic bitrate of BFT type or FTP bitrate
∘ CBR Channel
▪ VoIP
∘ CBR Channel
▪ Visio
- The quality C/No of the reception of the slots that it receives.

8. 4D-TDMA multiuser transmission system (10), **characterized in that** it comprises at least one controller device NCC in conjunction with several terminals (11i), said controller being adapted to execute the steps of the method according to one of claims 1 to 7.

9. Multiuser transmission system according to claim 8, **characterized in that** the device NCC and the user terminals operate in half-duplex.
